# EUROPEAN PATENT APPLICATION

(11) **EP 1 932 768 A1**
(43) Date of publication of application: **18.06.2008**
(21) Application number: 07122795.3
(22) Date of filing: 10.12.2007
(51) Int. Cl.: B65B 31/02, B65B 51/14

(54) **Device and method for vacuum sealed packaging**

(30) Priority: 11.12.2006 IT BO20060846
(71) Applicant: LA MINERVA DI CHIODINI MARIO S.R.L., 40138 Bologna (IT)
(72) Inventor: Scolaro, Mauro, 40138 Bologna (IT)
(74) Representative: Negrini, Elena

(57) **Abstract**

A device for vacuum sealed packaging a product inserted in a flexible and thermoweldable container, it comprises at least:
- a vacuum chamber (2) closable in a sealed manner, connected to a vacuum source (33) and to the atmospherical environment (A) respectively by means of at least a first valve means (4) and at least a second valve means (5);
- sealing means (3) contained in the chamber and moved, between an opening condition and a closing and welding condition of the container, by a set of actuators (6) of the pneumatic type;
- each actuator (6) is provided with a first chamber (7) separated by a second chamber (8) by means of its mobile piston (9) connected to the sealing means (3), said first chamber (7) is in a flux connection with the vacuum sealed chamber (2) through a duct (10), said second chamber (8) is connected to the vacuum source (33) ant to the atmospherical environment (A) respectively by means of a third valve means (11) and at least a forth valve means (12).

Said device (1) further comprises a flux reducer means (13) interposed between the second chambers (8) of the actuators (6) and the vacuum sealed chamber (2) in order to realize between them a reduced gas flux.

## Description

The present invention refers to the packaging and it relates to a device and a method for vacuum packaging particularly fit to prepare for selling foods as sliced salami, meats, cheeses and the like.

There are known vacuum or gas sealed packaging device for a product in a flexible container, generally an envelope. Said known devices are provided with a vacuum chamber into which the vacuum is produced by means of a suitable pump.

Optionally the chamber may be provided with gas injectors in order to inject a certain quantity of gas into the chamber after the vacuum creation.

The chamber of said known devices is internally provided with sealing means for the envelope, provided with welding bars fit to seal the envelope made of plastic thermoweldable material, containing the product to be packaged.

The chamber is also provided with taps or valves for the environmental air injection, which at the end of the sealing are opened restoring the atmospherical pressure inside the chamber and allowing its opening in order to extract the product vacuum sealed kept in the sealed container.

Thus the operation of said known devices is made by a known cycle that provides the positioning in the opened chamber of the product inserted in the container, the closure of the chamber and the vacuum creation therein, the possible gas injection, the welding and sealing of the container, the restoring of the atmospherical pressure inside the chamber, the opening of the chamber and the drawing of the product packaged inside the vacuum sealed container.

A drawback of said known devices and methods consists in that often they cause the curling up and the wrinkling up of the container with possible damages to the integrity and the edibility of the product and it causes a reduction of the commercial satisfaction of the consumers of said packaged products.

Another drawback of said known devices and methods consists in that the presence of tough and sharp-cornered products, like seasoned cheeses or meats with the bone, the container can be damaged or broken.

There are also known devices whose taps or valves for the air injection after the sealing have narrow necks or are predisposed for a reduced air flux in order to reduce the curling up and the risks of damaging the container.

A drawback of the above mentioned devices consists in that they cause an excessive waste of time for the packaging causing an efficiency reduction and increasing the costs.

An object of the present invention is to propose a device and a method for the vacuum sealed packaging fit to preserve the container form the curling up and the breaking.

Further object is to propose a device and a method fit to package in a speed and economic way.

The features of the invention are disclosed in the following with particular reference to the attached figures in which:

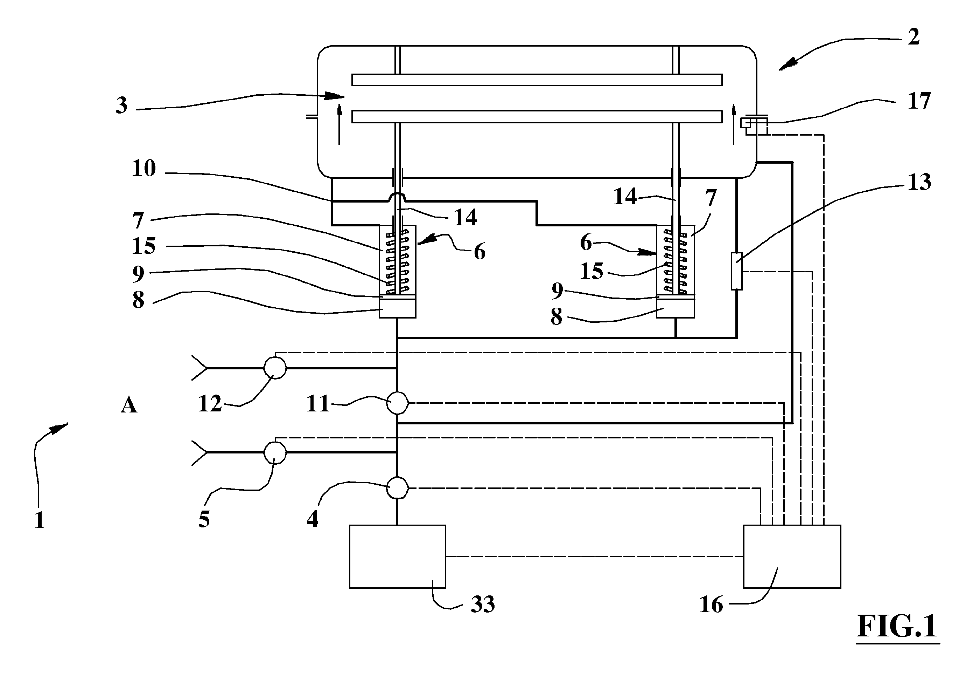

- Figure 1 shows a schematic view of the device for the vacuum sealed packaging, object of the present invention.

With reference to the figure 1, the numeral 1 indicates the device for the vacuum sealed packaging of a product inserted in a flexible and thermoweldable container.

The device 1 comprises a vacuum chamber 2 provided with a seal closable cover and connected to a vacuum source 33, consisting in a electrical vacuum pump or the like, and to the atmospherical ambient A respectively by means of at least a first valve means 4 and at least a second valve means 5.

The vacuum chamber contains sealing means 3 provided with upper and lower welding bars.

The upper bar is fixed to the cover and the lower bar is moved by two parallel actuators 6, of the pneumatic type, between an opening condition, in which the lower bar is spaced from the upper one and it is possible to subject the yet opened envelope to the vacuum, and a closing and welding condition of the envelope or container.

Each actuator 6 is provided with a first chamber 7 separated from a second chamber 8 by means of its mobile piston 9 provided with a stem which passes through the first chamber 7 and is connected to the lower bar of the sealing means 3.

The first chamber 7 is in flux connection with the vacuum chamber 2 by means of a duct 10.

The second chamber 8 is connected to the vacuum source 33 and to the atmospherical environment A respectively by means of at least a third valve mans 11 and at least a forth valve means 12.

The device 1 comprises a flux reducer 13 interposed between the second chambers 8 of the actuators 6 and the vacuum chamber 2 in order to realize between them a reduced gas flux.

The connection of the piston 9 and of the stem 14 to the lower bar of the sealing means 3 is directed in such a way that the closing and the sealing occur by a stem exit motion 14 from the first chamber 7.

Each actuators 6 is provided with a respective elastic means 15 fit to transmit to the stem 14 an elastic force oriented to the entry direction of the stem 14 into the first chamber 7 to keep elastically, and in absence of others opposite and stronger forces, the sealing means in the opening condition.

Each elastic means 15 consists in a helicoidal spring placed in the first chamber 7, wrapped around the stem 14 and acting in compression between the piston 9 and the fixed end of said first chamber 7.

Each valve means 4, 5, 11, 12 and the flux reducer means 13 are of the one way type which means that they are provided with a single inlet and a single outlet. Said inlets and outlets are connected to the other elements of the device by means of non collapsible ducts.

The first valve means 4 is directly interposed between the vacuum chamber 2 and the vacuum source 33, and the second valve means 5 is directly interposed between the vacuum chamber and the atmospherical environment A, the third valve means 11 is directly connected to the second chamber 8 of the actuators 6 and is connected to the vacuum source 33 by means of the first valve means 4 and the forth valve means 12 is directly interposed between the second chamber 8 of the actuators 6 and the atmospherical environment A.

The flux reducer means 13 is directly interposed between the second chamber 8 of the actuators 6 and the vacuum chamber 2.

The valve means 4, 5 ,11 ,12 are of the electrically controlled type and the flux reducer means 13 consists in a electrically adjustable narrow neck.

The device 1 comprises control means 16 electrically connected to the valve means 4, 5, 11, 12 in order to control them according to predefined timed sequence or, in case of electronic digital programmable type control means 16, on the basis of control programs.

In addiction the control means 16 may be optionally electrically connected to the flux reducer means 13 in order to adjust the air flux in the vacuum chamber during the welding and the sealing of the containing envelope.

The device may optionally comprise a micro-switch 17 or the like associated to the vacuum chamber cover 2 and connected to the control means 16 in order to provide the latter with a closing signal of the cover and with a starting signal of the envelope welding and sealing sequence.

The operation of the device provides, starting from an initial condition in which the bell cover is closed and the border of the envelope containing a product is opened and placed over the lower bar elastically maintained in the opening position, to:
close the second 5 and forth 12 valve means and open the first 4 and third 11 valve means and activate the vacuum source 33 until reaching a predefined negative pressure in the vacuum chamber, in the actuators chamber and in the ducts. When said pressure has been reached the vacuum source 33 is stopped and the first 4 and third 11 valve means are closed. Said sequence activation may be manually or automatically lead by the micro-switch 17 when the cover is closed.

The sequence proceeds with the opening of the forth valve means 12 which allows the air injection at atmospherical pressure in the second chamber 8 of the actuators 6 subjecting the pistons 9 to a pressure gradient that, outdoing the spring forces, causes the lower bar elevation and the reaching of the closed and sealed condition of the sealing means 3.

Simultaneously to the closure and the welding, the flux reducer 13 slowly injects atmospherical air in the vacuum chamber increasing progressively the pressure and causing the progressive and regular distension of the envelope over the product and over itself without folds formation and waste of time.

At the end of the closure and welding, the opening of each valve means, except the first valve means 4, causes the lowering of the lower bar of the sealing means and allows to open the vacuum sealed chamber in order to draw the packaged product and to start a new cycle.

The method for vacuum sealed packaging a product inserted in a flexible and thermoweldable container, object of the present invention, provides to:
- introduce into the opened vacuum chamber 2 the product inside the respective container;
- close the chamber 2 and create the vacuum therein;
- activate the sealing means 3 and, almost simultaneously, start to inject atmospherical air into the vacuum chamber until the restoring of the environmental pressure therein and until the sealing of the container, reducing the flow of said atmospherical air that comes into the vacuum sealed chamber 2 by means of the flux reducer 13;
- open the vacuum sealed chamber 2 and draw the vacuum sealed product in the container.

The method provides also to inject, by means of an injector, a predefined quantity of a gas in the vacuum sealed chamber 2 after having created the vacuum therein and before the activation of the sealing means 3.

An advantage of the present invention is to provide a device and a method for the vacuum sealed packaging fit to preserve the container form the curling up and the breaking.

Further advantage is to provide a device and a method fit to package in a speed and economic way.

## Claims

1. Device for vacuum sealed packaging a product inserted in a flexible and thermoweldable container, said device (1) comprises at least:
- a vacuum chamber (2) closable in a sealed manner, connected to a vacuum source (33) and to the atmospherical environment (A) respectively by means of at least a first valve means (4) and at least a second valve means (5);
- sealing means (3) contained in the chamber and moved, between an opening condition and a closing and welding condition of the container, by a set of actuators (6) of the pneumatic type;
- each actuator (6) is provided with a first chamber (7) separated by a second chamber (8) by means of its mobile piston (9) connected to the sealing means (3), said first chamber (7) is in a flux connection with the vacuum sealed chamber (2) through a duct (10), said second chamber (8) is connected to the vacuum source (33) ant to the atmospherical environment (A) respectively by means of a third valve means (11) and at least a forth valve means (12);
said device (1) is **characterized in that** it comprises a flux reducer means (13) interposed between the second chambers (8) of the actuators (6) and the vacuum sealed chamber (2) in order to realize between them a reduced gas flux.

2. Device according to claim 1 **characterized in that** each piston (9) is connected to the sealing means (3) at least by means of its stem (14) and **in that** the first chamber (7) is the chamber passed through by said stem (14).

3. Device according to claim 2 **characterized in that** the connection of the piston (9) and of the stem (14) to the sealing means (3) is in a such way that the closing and the sealing occur by a stem exit motion (14) from the first chamber (7).

4. Device according to claim 3 **characterized in that** it comprises a set of elastic means (15), each of them associated to a respective actuator (6) in order to transmit to the stem (14) an elastic force oriented to the entry direction of the stem (14) into the first chamber (7).

5. Device according to claim 4 **characterized in that** each elastic means (15) comprises a helicoidal spring placed in the first chamber (7) and acting in compression between the piston (9) and the fixed end of said first chamber (7).

6. Device according to claim 5 **characterized in that** the helicoidal spring of the elastic means (15) is wrapped around the stem (14).

7. Device according to claim 1 **characterized in that** the first valve means (4) is directly interposed between the vacuum sealed chamber (2) and the vacuum source (33).

8. Device according to claim 1 **characterized in that** the first valve means (4) is directly interposed between the vacuum sealed chamber (2) and the atmospherical environment (A).

9. Device according to claim 1 **characterized in that** the third valve means (11) is directly connected to the second chambers (8) of the actuators (6) and is connected to the vacuum source (33) by means of the first valve means (4).

10. Device according to claim 1 **characterized in that** the forth valve means (12) is directly interposed between the second chambers (8) of the actuators (6) and the atmospherical environment (A).

11. Device according to claim 1 **characterized in that** the flux reducer means (13) is directly interposed between the second chambers (8) of the actuators (6) and the vacuum chamber (2).

12. Device according to claims 7 - 11 **characterized in that** the valve means (4, 5, 11, 12) and the flux reducer means (13) are provided with a single inlet and a single outlet and are connected through non collapsible ducts.

13. Device according to claims 7 - 11 **characterized in that** the valve means (4, 5, 11, 12) are of the electrical controlled type and the flux reducer means (13) consists in a electrical adjustable narrow neck.

14. Device according to claim 13 **characterized in that** it comprises control means (16) electrical connected to the valve means (4, 5, 11, 12) in order to control them.

15. Device according to claim 14 **characterized in that** the control means (16) are electrical connected to the flux reducer means (13) in order to adjust it.

16. Device according to claim 14 **characterized in that** it comprises a micro-switch (17) or the like associated to the vacuum chamber (2) cover and connected to the control means (16) in order to provide to the latter a closing signal of the cover.

17. Device according to claims 14 - 16 **characterized in that** the control means (16) are of the digital electronic programmable type.

18. Method for vacuum sealed packaging, by means of the device of any of the previous claims, a product inserted in a flexible and thermoweldable container **characterized in**:
- introducing into the opened vacuum chamber (2) the product inside the respective container;
- closing the chamber (2) and creating the vacuum therein;
- activating the sealing means (3) and almost simultaneously, starting to inject atmospherical air into the vacuum sealed chamber until the restoring of the environmental pressure therein and until the sealing of the container;
- opening the vacuum sealed chamber (2) and drawing the product vacuum packaged inside the sealed container.

19. Method according to claim 18 **characterized in** reducing the flow of the atmospherical air that comes into the vacuum sealed chamber (2) by means of the flux reducer (13).

20. Device according to claim 18 **characterized in** injecting, by means of an injector, a predefined quantity of a gas into the vacuum sealed chamber (2) after having created the vacuum therein and before activating the sealing means (3).
